# EUROPÄISCHE PATENTSCHRIFT

(11) **EP 0 903 546 B1**
(45) Veröffentlichungstag und Bekanntmachung des Hinweises auf die Patenterteilung: **22.05.2002**
(21) Anmeldenummer: 98115958.5
(22) Anmeldetag: 25.08.1998
(51) Int. Cl.: F24J 2/26, F24J 2/46

(54) **Sonnenkollektor**
Solar collector
Collecteur solaire

(30) Priorität: 19.09.1997 DE 19741277
(43) Veröffentlichungstag der Anmeldung: 24.03.1999
(73) Patentinhaber: VIESSMANN WERKE GmbH & CO., 35107 Allendorf/Eder (DE)
(72) Erfinder: Strauss, Rolf-Peter, Dr., 35066 Frankenberg (DE); Böhle, Werner, 35066 Frankenberg (DE)
(74) Vertreter: Wolf, Günter, Dipl.-Ing.

(56) Entgegenhaltungen:
- AT-B- 374 912
- DE-A- 3 310 326
- FR-A- 2 420 099

## Beschreibung

Die Erfindung betrifft einen Sonnenkollektor, bestehend aus einem einstrahlungsseitig mit einer transparenten Abdeckung versehenen Gehäuse, in dem eine Absorberfläche mit mindestens einer Leitung für das durchströmende Wärmeträgermedium angeordnet und das aus einer in Form gezogenen Kunststoff-Folienschale mit umlaufendem Anschlußrand für die ebenfalls aus einer Folie gebildeten Abdeckung gebildet ist.

Ein Sonnenkollektor dieser Art ist bspw. nach dem DE-U-7638654 bekannt. Die Verbindung von Schale bzw. Kunststoffwanne und der in diesem Falle ebenfalls als Kunststoffwanne ausgebildeten Abdeckung ist dabei derart vorgesehen, daß diese beiden Kunststoffwannen mit ihren Rändern an der Peripherie eines Wärmeabsorbers befestigt sind, d.h., Kunststoffwannen und Absorber(hydraulisches System) bilden eine nicht trennbare Einheit, aus der an gegenüberliegenden Seiten die Vor- und Rücklaufanschlüsse für die Führung des Wärmeträgermediums im Absorber herausragen. Eine Verkopplung derartiger Kollektoren untereinander zwecks Erstellung einer größeren Kollektorfläche verlangt also eine geeignete Verbindung der Vor-und Rücklaufanschlüsse bspw. durch Schlauchstücke od.dgl. Da bei diesem vorbekannten Kollektor Gehäuse, Absorber und hydraulisches System eine Einheit bilden, muß im Schadensfall die ganze Einheit ausgewechselt und eine neue mit den am Dach verbliebenen Kollektoren erneut hydraulisch verkoppelt werden. Ausgegangen ist beim Ganzen dabei davon, was auch für den vorliegenden erfindungsgemäßen Kollektor gilt, daß derartige Kollektoren mit Rücksicht auf ihre Ausbildung aus mehr oder weniger dünner Kunststofffolie in ihrer Größenbemessung begrenzt sind und diese in der Regel zu mehreren zu einer größeren Kollektorfläche zusammengefügt werden, ganz abgesehen davon, daß sich kleinere Kollektorgehäuse in jeder Hinsicht besser handhaben lassen.

Der Erfindung liegt die Aufgabe zugrunde, einen kostengünstig herstellbaren, ohne zusätzliche hydraulische Verbindungsmittel mit mindestens einem weiteren, identisch ausgebildeten, zu einer größeren Kollektorfläche koppelbaren Kollektor zu schaffen, verbunden mit der Maßgabe, Gehäuse und hydraulisches System separat fertigen, installieren und in Folge das Gehäuse unabhängig vom hydraulischen System im Bedarfsfall genauso einfach auswechseln zu können, wobei außerdem die Bodenfläche des Gehäuses als dessen Auflagefläche erhalten bleiben soll.

Diese Aufgabe ist mit einem Sonnenkollektor der eingangs genannten Art nach der Erfindung durch die im Kennzeichen des Patentanspruches 1 angeführten Merkmale gelöst. Vorteilhafte Weiterbildungen ergeben sich nach den abhängigen Ansprüchen.

Durch diese erfindungsgemäße Ausbildung wird das lediglich aus einer geeigneten Folie ausgeformte Gehäuse ohne irgendwelche äußeren, nutbildenden Elemente oder sonstigen Halter durch seine nach innen zu einer beidendig offen endenden Nut ausgeformte Bodenfläche selbst zum Klemmelement, das die den Wärmeträger führende Leitung gewissermaßen von außen her in sich aufnimmt, wobei der die Nut bildende und die Leitung aufnehmende Wandungsteil der Bodenfläche gleichzeitig als Aufsteckhalter für den entsprechend ausgeformten und bemessenen Absorber ausgenutzt ist.

Da, was noch näher zu erläutern sein wird, das Kollektorgehäuse eine völlig separate Einheit zum hydraulischen System bildet, das im einfachsten Fall lediglich aus einem entsprechend langen Rohr oder einem ausreichend steifen Schlauch besteht, kann das Gehäuse in großer Stückzahl rationell und damit äußerst kostengtünstig gefertigt werden, wobei das Gehäuse in seiner Größe der eines Dachziegelformates oder einem Mehrfachen davon entsprechen kann. "Einer mehrfachen Größe" ist dabei eine Grenze durch die Festigkeit bzw. Steifigkeit des verwendeten Folienmaterials gesetzt.

Bezüglich der Installation eines solchen erfindungsgemäßen Kollektors hat der Installateur lediglich das hydraulische System auf dem Dach oder sonstigem Installationsort zu installieren und dann auf die Leitung die Kollektorgehäuse gewissermaßen nur aufzuschnäppen. Ebenso einfach ist demgemäß ein evtl. notwendig werdenden Austausch von Kollektorgehäusen. Die zum Aufschnäppen des Kollektors in dessen Boden nach innen einragende Nut bzw. die die Nut bildende Wand als Teil der nach innen eingewölbten Bodenfläche wird dabei gleichzeitig bei der Vorfertigung des Kollektorgehäuses ausgenutzt, um den Absorber ohne sonstige Hilfsmittel im Gehäuse bzw. der Folienschale plazieren und fixieren zu können. Der so aufgeschnäppte Absorber sorgt dabei seinerseits vorteilhaft für eine Stabilisierung der Nutwandung.

Der Wirkungsgrad eines solchen "Einfachkollektors" mag zwar nicht ganz so hoch sein wie der anspruchsvoller gestalteter Kollektoren bekannter Art, dem stehen aber die äußerst kostengünstige Herstellbarkeit und auch Installation gegenüber, die den Einsatz von Sonnenkollektoren, von der Kostenseite her gesehen, viel eher als bisher für Interessenten in den Bereich des Möglichen rücken. Außerdem sorgt die sich im Inneren des Gehäuses erstreckende Nut dafür, daß die Bodenfläche des Gehäuses als Auflagefläche erhalten bleibt, was bspw. bei einem Kollektor nach der FR-A-2420099 nicht der Fall ist, bei dem eine solche Aufstecknut aus der Bodenfläche nach außen ragt, ganz abgesehen davon, daß dieser Kollektor nicht aus einer dünnwandigen Folienschale gebildet ist.

Der erfindungsgemäße Sonnenkollektor und dessen vorteilhaften Ausführungs- und Weiterbildungsformen werden nachfolgend an Hand der zeichnerischen Darstellung von Ausführungsbeispielen näher erläutert.

Es zeigt
- Fig.1: einen Schnitt durch den Sonnenkollektor längs Linie I-I in Fig.2;
- Fig.2: einen Längsschnitt durch den Sonnenkollektor längs Linie II-II in Fig.1;
- Fig.3: eine Draufsicht auf den Sonnenkollektor gemäß Fig.1,2;
- Fig.4: einen Fig.1 entsprechenden Schnitt durch eine andere Ausführungsform ;
- Fig.5: eine Draufsicht auf den Sonnenkollektor nach Fig.4;
- Fig.6: einen Fig.1 entsprechenden Schnitt durch eine weitere Ausführungsform;
- Fig.7: perspektivisch ein Ausführungsbeispiel eines Halteelementes und
- Fig.8: schematisch und in Draufsicht einen aus mehreren erfindungsgemäßen Sonnenkollektoren zusammengesetzten Sonnenkollektor.

Der Sonnenkollektor besteht nach wie vor aus einem einstrahlungsseitig mit einer transparenten Abdeckung 2 versehenem Gehäuse 1, in dem eine Absorberfläche 3 mit mindestens einer Leitung 4 für das durchströmende Wärmeträgermedium angeordnet und das aus einer in Form gezogenen Kunststoff-Folienschale 5 mit umlaufenden Anschlußrand 6 für die ebenfalls aus einer Folie 2' gebildeten Abdeckung 2 gebildet ist.

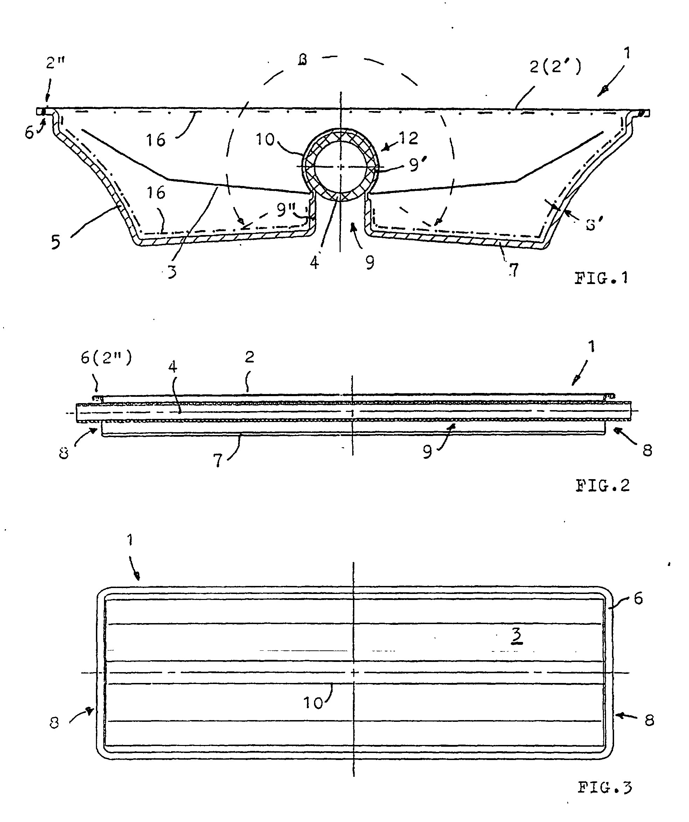

Ausgehend von einem solchen Sonnenkollektor ist nun gemäß Erfindung wesentlich, daß im Boden 7 der Folienschale 5 eine zu deren Seitenwänden 8 hin offen ausmündende, auf die Leitung 4 selbsthaltend aufsteckbare, mit ihrer Wand 9' sich im Inneren der Folienschale 5 erstreckende Nut 9 ausgeformt ist und daß die im Gehäuse 1 angeordnete Absorberfläche 3 mit einer auf die Wand 9' der Nut 9 aufsteckbaren, zu den Rändern 3' der Absorberplatte 3 ebenfalls offen ausmündenden Nut 10 versehen ist. Unter "aufsteckbarer Nut" ist dabei eine Nutbemessung bzgl. ihrer Breite zu verstehen, daß die Nut 9 straff auf der Leitung 4 sitzt. Bevorzugt wird diesbezüglich allerdings die in Fig.1 dargestellte Ausführungsform, bei der die Nut 9 mit ihren Flankenwänden 9'' die Leitung 4 untergreift.

Was die transparente Abdeckung 2 betrifft, so könnte diese ebenfalls als formstabile Schale (nicht dargestellt) ausgebildet sein, die ihrerseits mit einem entsprechenden Auflagerand mit dem der Folienschale 5 verklebt oder verschweißt ist. Bevorzugt wird aber für die Abdeckung 2 eine spannbare Folie benutzt, die, wie dargestellt, im gespannten Zustand mit ihren Rändern 2'' mit dem Anschlußrand 6 der Folenschale 5 verschweißt oder verklebt wird, nachdem vorher die Absorberfläche 3 auf der Innenfläche der Nut 9 fixiert worden ist. Da der Innenraum des Gehäuses somit hermitsch abgeschlossen ist, kann vorteilhaft vorgesehen werden, diesen mit einem geeigneten Edelgas zu füllen, um Wärmeverluste zu reduzieren.

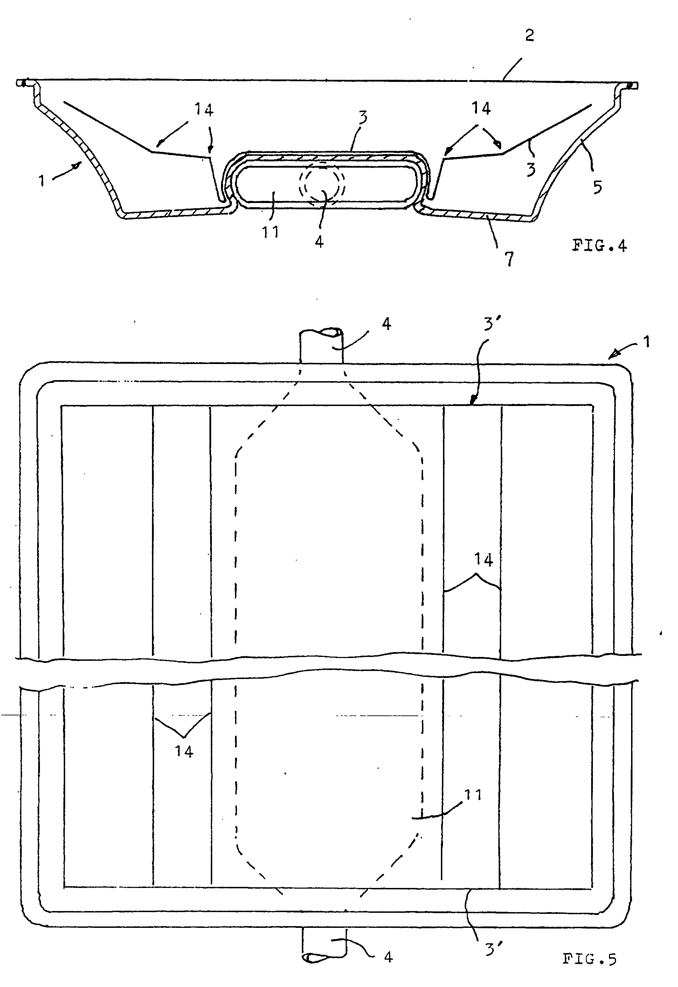

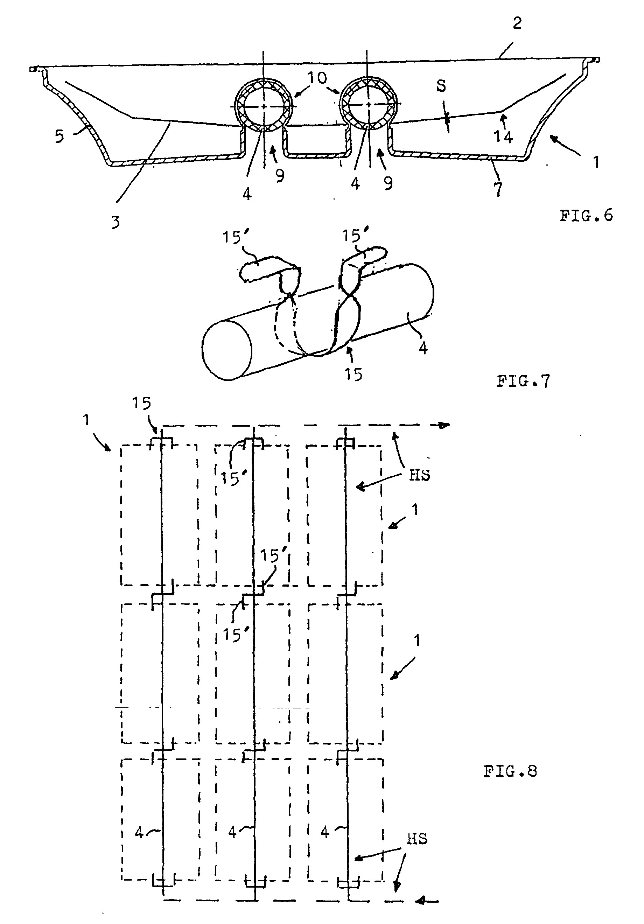

Um die Wärmetauschfläche zwischen Leitung 4 und Innenraum des Gehäuses 1 zu vergrößern, besteht eine vorteilhafte Weiterbildung unter Verweis auf die Fig. 4,5 darin, daß die Leitung 4 im Bodenbereich des Gehäuses 1 mit einer flach-kissenförmigen Erweiterung 11 versehen ist und die Nuten 9,10 im Boden des Gehäuses 1 und in der Absorberfläche 3 formentsprechend erweitert sind. Derartige Erweiterungen 11 an der Leitung 4 vorzusehen, stellt kein Problem dar, da derartige Erweiterungen 11 ohne weiteres durch das bekannte Innenhochdruckformverfahren hergestellt werden können. Eine solche Übertragungsflächenvergrößerung wäre aber auch dadurch möglich, daß bspw. zwei Leitungen, wie in Fig.6 dargestellt, entsprechende Nuten 9 im Boden 7 des Gehäuses durchgreifen. Die Absorberfläche 3 weist dann ebenfalls zwei Nuten 10 auf. Was im übrigen die Absorberfläche 3 betrifft, so ist diese bevorzugt aus einem Cu-Blechzuschnitt mit einer Stärke S in der Größenordnung von 0,2 mm gebildet, wobei dieser Blechzuschnitt parallel beidseitig zur Aufnahmenut 9 mit Versteifungskröpfungen 14 versehen ist.

Weitere vorteilhafte Einzelausbildungen bestehen in Folgendem: Um die Kontaktfläche zwischen Leitung 4 und Absorberfläche einerseits so groß wie möglich zu bemessen, andererseits aber den Aufschub des Gehäuses 1 auf die Leitung 4 nicht zu sehr zu erschweren, ist die Nut 9 so ausgeformt, daß ihr die Leitung 4 umfassender Teil 12 und der Teil 13 der Absorberfläche 3 die Leitung 4 mit einer Bogenlänge β von im wesentlichen 270° umfassen, wie dies in Fig.1 dargestellt ist.
Ebenfalls für den Wärmeübergang förderlich ist die Maßgabe (siehe ebenfalls Fig.1), den die Leitung 4 umfassenden Teil 12 der Aufnahmenut 9 dünner zu bemessen als den restlichen Teil der Kunststoff-Folienschale 5, die im übrigen vorzugsweise aus Polykarbonatfolie mit einer Stärke S' in der Größenordnung von < 2 mm gebildet wird. Diese geringe Folienstärke und auch die der Absorberfläche 3 können insbesondere dadurch in Betracht gezogen werden, daß das Gehäuse 1 durch seine Aufsetzung auf die Leitung 4 in sich stabilisiert wird, abgesehen davon, daß die Ausbildung der Nuten 9 und 10 per se zu einer entsprechenden Versteifung des Gehäuses 1 beitragen.

Um sich bezgl. der Fixierung des bzw. der Gehäuse 1 an der Leitung 4 nicht allein auf die Fixierung per Nut 9 zu verlassen zu müssen, ist das Gehäuse 1 bzw. sind die Gehäuse mit Halteelementen 15 an der Leitung 4 fixiert, die natürlich auch so einfach, kostengünstig und zweckmäßig handhabbar wie möglich sein sollen. Eine Ausführungsform eines solchen Halteelementes 15 ist in Fig.7 dargestellt, das aus einem einfachen, bleibend biegbaren Blechstreifen besteht, der um die Leitung 4 gelegt wird und dessen Enden bzw. Schenkelenden 15' über die Ränder benachbart angeordneter Kollektorgehäuse angelegt werden.

In Fig 8 ist ein Anordnungsbeispiel von Einzelkollektoren, wie vorbeschrieben, dargestellt, bei dem die Gesamtkollektorfläche hier aus insgesamt neun Einzelkollektoren besteht, die jeweils zu dritt auf einer der drei vorgesehenen Leitungen 4 sitzen und an diesen mit den Halteelementen 15 gemäß Fig. 7 fixiert sind, die an den oberen und unteren Rändern der Gesamtkollektorfläche mit ihren beiden Schenkelenden 15' über die Ränder der Gehäuse 1 gebogen werden. Diese Anordnungsbeispiel macht deutlich, wie einfach die Installation einer solchen Kollektorfläche aus mehren kleinen Gehäusen 1(bspw. in Dachziegelgröße) zu bewerkstelligen ist. So wird das vorzugsweise vorgefertigte hydraulische System HS mit seinen Leitungen 4 und seinen unter die Dachhaut zu führenden Anschlüssen auf dem Dach angeordnet und in geeigneter Weise fixiert, wonach die Gehäuse 1 lediglich auf die Leitungen 4 aufzudrücken und gegf. mit den vorerwähnten Halteelementen 15 zu fixieren sind. Ebenso unproblematisch ist bei Bedarf die Auswechselung von Gehäusen 1 aus dem Gesamtverbund, da davon das hydraulisch System davon unberührt bleibt.

Da für den beschriebenen Kollektor bzw. dessen Gehäuse 1 mit Rücksicht auf die Witterungsbeständigkeit anspruchsvolle und damit entsprechend teure Folie benutzt werden muß, diese also einerseits möglichst dünn sein sollte, anderseits aber auch der Formstabilität entsprochen sein muß, besteht eine vorteilhafte Weiterbildung darin, mindestens in der Kunststoff-Folienschale 5 eine an deren Wandung formangepaßte Stützbewehrung 16 anzuordnen, die in Fig.1 strichpunktiert mit angedeutet ist. Diese Stützbewehrung 16 kann sich auch unter der Abdeckung 2 erstrecken, und zwar insbesondere dann, wenn diese ebenfalls schalenartig ausgebildet sein sollte. Bei der Stützbewehrung 16 kann es sich einfach um ein in Form gebrachtes Blech handeln, das gegf. gelocht sein kann, oder auch um ein korbartiges Gebilde aus Draht oder aus Kunststoff. Sofern sich eine solche Stützbewehrung 16 auch unter der Abdeckung 2 erstreckt, muß diese auf jeden Fall die Einstrahlung im ausreichenden Maße durchlassende Struktur aufweisen.

## Patentansprüche

1. Sonnenkollektor, bestehend aus einmem einstrahlungsseitig mit einer transparenten Abdeckung (2) versehenen Gehäuse (1), das mit identischen Gehäusen zu einer größeren Kollektorfläche zusammenfügbar ist und in dem eine Absorberfläche (3) mit mindestens einer Leitung (4) für das durchströmende Wärmeträgermedium angeordnet und das aus einer in Form gezogenen Kunststoff-Folienschale (5) mit umlaufenden Anschlußrand (6) für die ebenfalls aus einer Folie (2') gebildeten Abdeckung (2) gebildet ist,
**dadurch gekennzeichnet,**
**daß** im Boden (7) der Folienschale (5) eine zu deren Seitenwänden (8) hin offen ausmündende, auf die Leitung (4) aufsteckbare, mit ihrer Wand (9') sich im Inneren der Folienschale (5) erstreckende Nut (9) ausgeformt ist und daß die im Gehäuse (1) angeordnete Absorberfläche (3) mit einer auf die Wand (9') der Nut (9) aufsteckbaren, zu den Rändern (3') der Absorberfläche(3) ebenfalls offen ausmündenden Nut (10) versehen ist.

2. Sonnenkollektor nach Anspruch 1,
**dadurch gekennzeichnet,**
**daß** die Nut(9) mit ihren Flankenwänden(9') die Leitung (4) teilweise untergreifend ausgebildet ist.

3. Sonnenkollektor nach Anspruch 1 oder 2,
**dadurch gekennzeichnet,**
**daß** die Folienschale(5) mit einem umlaufenden Auflagerand(5') versehen und an diesem die transparente, ebenflächige Abdeckung (2) im gespannten Zustand mit ihren Rändern (2') verschweißt oder verklebt ist.

4. Sonnenkollektor nach einem der Ansprüche 1 bis 3,
**dadurch gekennzeichnet,**
**daß** das Gehäuse (1) mit einem Edelgas gefüllt ist.

5. Sonnenkollektor nach einem der Ansprüche 1 bis 4,
**dadurch gekennzeichnet,**
**daß** die Leitung (4) im Bodenbereich des Gehäuses (1) mit einer Erweiterung (11) versehen ist und die Nuten (9,10) im Boden (7) des Gehäuses (1) und in der Absorberfläche (3) entsprechend formangepaßt erweitert sind.

6. Sonnenkollektor nach einem der Ansprüche 1 bis 5,
**dadurch gekennzeichnet,**
**daß** der die Leitung (4) umfassende Teil (12) der Nut (9) in seiner Wandstärke (S) dünner bemessen ist als der restliche Teil der Kunststoff-Folienschale (5).

7. Sonnenkollektor nach einem der Ansprüche 1 bis 4,
**dadurch gekennzeichnet,**
**daß** der die Leitung (4) umfassende Teil (12) der Nut (9) und der diesen Teil (12) umfassende Teil (13) der Absorberfläche (3) die Leitung (4) mit einer Bogenlänge (B) von im wesentlichen 270° umfassen.

8. Sonnenkollektor nach einem der Ansprüche 1 bis 7,
**dadurch gekennzeichnet,**
**daß** die Kunststoff-Folienschale (5) aus Polykarbonatfolie mit einer Stärke (S') in der Größenordnung von < 2 mm gebildet ist.

9. Sonnenkollektor nach einem der Ansprüche 1 bis 8,
**dadurch gekennzeichnet,**
**daß** die Absorberfläche (3) aus einem Cu-Blechzuschnitt mit einer Stärke in der Größenordnung von 0,2 mm gebildet und dieser Zuschnitt parallel beidseitig zu Aufnahmenut (9) mit Versteifungskröpfungen (14) versehen ist.

10. Sonnenkollektor nach einem der Ansprüche 1 bis 9,
**dadurch gekennzeichnet,**
**daß** das Gehäuse (1) mit lösbaren Halteelementen (15) an der Leitung (4) fixiert ist.

11. Sonnenkollektor nach einem der Ansprüche 1-10,
**dadurch gekennzeichnet,**
**daß** mindestens in der Kunststoff-Folienschale (5) eine an deren Wandung formangepaßte Stützbewehrung (16) angeordnet ist.

## Claims

1. A solar collector, comprising a casing (1) provided, on the side of insolation, with a transparent cover (2), with the casing being joint together with identical casings to form a major collector surface, and in which is arranged an absorber surface (3) provided with at least one line (4) for the heat carrier medium flowing therethrough and which is formed from a moulded shell (5) of plastic foil having a circumferential connecting edge (6) for the cover (2) equally formed from a foil (2'),
**characterized in that** moulded in the bottom (7) of the foil shell (5) is a groove (9) terminating to open toward the side walls (8) thereof and being plugged onto the line (4) and extending, with wall (9'), into the interior of the foil shell (5), and that the absorber surface (3) arranged within the said casing (1) is provided with a groove (10) plugged onto the wall (9') of groove (9) and equally terminating to open toward the edges (3') of the absorber surface (3).

2. A solar collector according to claim 1
**characterized in that** the groove (9) with the flank walls (9') thereof is formed to partially undercut line (4).

3. A solar collector according to claim 1,
**characterized in that** the foil shell (5) is provided with a circumferential mounting edge (5') and that the transparent, planar cover (2), in loaded condition, is welded or cemented thereto with the edges (2') thereof.

4. A solar collector according to any one of claims 1 through 3,
**characterized in that** the casing (1) is filled with an inert gas.

5. A solar collector according to any one of claims 1 through 4, **characterized in that** the line (4), in the bottom area of the casing (1), is provided with an expansion (11), and that the grooves (9, 10), in the bottom (7) of the casing (1) and in the absorber surface (3), are expanded to conform in shape accordingly.

6. A solar collector according to any one of claims 1 through 5,
**characterized in that** section (12) of groove (9) comprising line (4) is of a thinner wall strength (S) than the remaining part of the plastic foil shell (5).

7. A solar collector according to any one of claims 1 through 4,
**characterized in that** section (12) of groove (9) comprising line (4)and section (13) of the absorber surface (3) comprising the said section (12) embrace line (4) at an arc length (B) of substantially 270°.

8. A solar collector according to any one of claims 1 through 7,
**characterized in that** the plastic foil shell (5) is formed of polycarbonate foil of a strength (S') in the order of < 2 mm.

9. A solar collector according to any one of claims 1 through 8,
**characterized in that** the absorber surface (2) is formed of a Cu sheet blank of a strength in the order of 0.2 mm and that the said blank, in parallel, is provided, on both sides of the accommodating groove (9), with reinforcing offsets (14).

10. A solar collector according to any one of claims 1 through 9,
**characterized in that** the casing (1) is fixed to line (4) by means of detachable holding elements (15).

11. A solar collector according to any one of claims 1 through 10,
**characterized in that** provided at least in the plastic foil shell (5) is a reinforcir g support (16) conforming in shape to the wall thereof.

## Revendications

1. Collecteur solaire comportant un bâti (1), pourvu du côté de l'incidence du rayonnement d'un couvercle transparent (2), qui peut être assemblé avec des bâtis identiques pour former une plus grande surface de collecteur et dans lequel une surface d'absorbeur (3) est placée avec au moins une conduite (4) pour l'agent caloporteur qui traverse et qui est formé par une cuvette en feuille en matière plastique étirée (5) avec un bord de raccord périphérique (6) pour le couvercle (2) également formé en une feuille (2'),
**caractérisé en ce**
**qu'**une rainure (9) est moulée dans le fond (7) de la cuvette en feuille (5) en débouchant en étant ouverte vers ses parois latérales, rainure qui peut être emboîtée sur la conduite (4), qui s'étend avec sa paroi (9') dans l'intérieur de la cuvette en feuille (5) et que la surface d'absorbeur (3) placée dans le bâti (1) est pourvue d'une rainure (10) qui peut être emboîtée sur la paroi (9') de la rainure (9), qui débouche en étant également ouverte vers les bords (3') de la surface d'absorbeur (3).

2. Collecteur solaire selon la revendication 1,
**caractérisé en ce**
**que** la rainure (9) est configurée avec ses parois de flanc (9') en saisissant partiellement la conduite (4) par en-dessous.

3. Collecteur solaire selon la revendication 1 ou 2,
**caractérisé en ce**
**que** la cuvette en feuille (5) est pourvue d'un bord d'appui périphérique (5') et que le couvercle transparent à surface plate (2) est soudé ou collé à celui-ci à l'état tendu avec ses bords (2').

4. Collecteur solaire selon l'une des revendications 1 à 3,
**caractérisé en ce**
**que** le bâti (1) est rempli d'un gaz rare.

5. Collecteur solaire selon l'une des revendications 1 à 4,
**caractérisé en ce**
**que** la conduite (4) dans la zone du fond du bâti (1) est pourvue d'un élargissement (11) et les rainures (9, 10) dans le fond (7) du bâti (1) et dans la surface d'absorbeur (3) sont élargies en étant de forme adaptée en conséquence.

6. Collecteur solaire selon l'une des revendications 1 à 5,
**caractérisé en ce**
**que** la partie (12) de la rainure (9) qui entoure la conduite (4) est dimensionnée d'épaisseur de paroi (S) plus mince que la partie qui reste de la cuvette en feuille plastique (5).

7. Collecteur solaire selon l'une des revendications 1 à 4,
**caractérisé en ce**
**que** la partie (12) de la rainure (9) qui entoure la conduite (4) et la partie (13) de la surface d'absorbeur qui entoure cette partie (12) entourent la conduite (4) avec une longueur d'arc (B) de substantiellement 270°.

8. Collecteur solaire selon l'une des revendications 1 à 7,
**caractérisé en ce**
**que** la cuvette en feuille plastqiue (5) est formée en une feuille de polycarbonate d'une épaisseur (S') de l'ordre de grandeur de < 2 mm.

9. Collecteur solaire selon l'une des revendications 1 à 8,
**caractérisé en ce**
**que** la surface d'absorbeur (3) est formée par une pièce découpée en tôle de Cu d'une épaisseur de l'ordre de grandeur de 0,2 mm et cette pièce découpée est pourvue parallèlement des deux côtés d'une rainure de logement (9) avec des coudures de renforcement (14).

10. Collecteur solaire selon l'une des revendications 1 à 9,
**caractérisé en ce**
**que** le bâti (1) est fixé à la conduite (4) par des éléments de maintien amovibles (15).

11. Collecteur solaire selon l'une des revendications 1 à 10,
**caractérisé en ce**
**qu'**une armature de soutien (16) de forme adaptée à la paroi de la cuvette en feuille plastique (5) est placée au moins dans la cuvette en feuille plastique.
